## Europäisches Patentamt

## European Patent Office

## Office européen des brevets

(11) Veröffentlichungsnummer: **0 230 885
B1**

(12) # EUROPÄISCHE PATENTSCHRIFT

(45) Veröffentlichungstag der Patentschrift:
05.04.89

(21) Anmeldenummer: 87100217.6

(22) Anmeldetag: 09.01.87

(51) Int. Cl.⁴: **F01D 25/16, F16C 27/02
// F02C6/12**

(54) Abgasturbolader.

(30) Priorität: 16.01.86 DE 3601082

(43) Veröffentlichungstag der Anmeldung:
05.08.87 Patentblatt 87/32

(45) Bekanntmachung des Hinweises auf die Patenterteilung:
05.04.89 Patentblatt 89/14

(84) Benannte Vertragsstaaten:
AT DE FR GB IT

(56) Entgegenhaltungen:
CH-A- 211 645
DE-A- 1 400 440
DE-A- 2 403 768
DE-U- 7 337 624
GB-A- 908 567
US-A- 3 811 741

(73) Patentinhaber: A.G. Kühnle, Kopp & Kausch,
Postfach 265 Hessheimer Strasse 2,
D-6710 Frankenthal/Pfalz(DE)

(72) Erfinder: Zloch, Norbert, Dr.-Ing., Alkmaarstrasse 6,
D-6100 Darmstadt(DE)
Erfinder: Förster, Arno, Ing.-grad., Landgrafenstrasse 4,
D-6520 Worms(DE)
Erfinder: Münkel, Uwe, Dipl.-Ing., Lambsheimer
Strasse 47, D-6710 Frankenthal(DE)

(74) Vertreter: Klose, Hans, Dipl.-Phys. et al,
Kurfürstenstrasse 32, D-6700 Ludwigshafen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Lagerung eines Abgasturboladers gemäß den im Oberbegriff des Patentanspruchs 1 angegebenen Merkmalen.

Aus der US-A 3 811 741 ist eine derartige Lagerung eines Abgasturboladers nachgewiesen, deren zur radialen Lagerung einer Welle vorgesehene Hülse mittels eines Sicherungsstiftes gegen Rotation gesichert ist. Dieser Sicherungsstift befindet sich in einer axialen Ebene und ist auf das Zentrum der Welle ausgerichtet. Die Durchbrechung ist als eine Bohrung ausgebildet, in welcher der Sicherungsstift mit seiner Spitze hineinragt, wobei ein Bewegungsspiel vorhanden ist. Der Sicherungsstift schränkt die freie Bewegbarkeit der Hülse nicht nur in Drehrichtung ein, sondern vor allem auch in axialer Richtung. Zwischen dem Sicherungsstift und der Durchbrechung der Hülse ist eine im wesentlichen flächenhafte Berührung vorhanden. Die Hülse weist zusätzliche Durchbrechungen auf, durch welche das den Lagerflächen zugeführte Schmiermittel abfließen kann. Die Gesamtmasse der Hülse ist trotz den Durchbrechungen, welche als Bohrungen ausgebildet sind, vergleichsweise groß.

Aus der CA-A 718 715 ist ein Abgasturbolader bekannt, dessen Hülse an dem einen axialen Ende mit Zähnen und Schlitzen versehen ist. Eine mit dem Lagergehäuse drehfest verbundene Druckscheibe weist entsprechende Schlitze und Zähne auf, in welche die der Hülse eingreifen. Hierdurch wird nicht nur die Rotation der Hülse um die Drehachse der Welle verhindert. Auch weitere Freiheitsgrade werden weitgehend eingeschränkt, wobei insbesondere die beiden anderen rotatorischen Freiheitsgrade um die zur Längsachse senkrechten Raumachsen praktisch aufgehoben werden. Auch die translatorischen Freiheitsgrade werden nicht unwesentlich eingeschränkt, da an den Berührungsflächen der Zähne von Hülse und Druckscheibe eine Flächenpressung auftritt. Eine schwimmende Anordnung der vorbekannten Hülse ist nicht in der erforderlichen Weise realisiert. Die Hülse enthält in der Mitte zwei kleine Bohrungen für das Schmiermittel und weist im übrigen eine vergleichsweise große Masse auf. Mit dem vorbekannten Abgasturbolader lassen sich Drehzahlen bis etwa 80.000 U/min realisieren.

Ferner ist aus dem DE-U 7 337 624 ein Abgasturbolader mit zwei axial beabstandeten Lagerbuchsen bekannt. In der Mitte zwischen den Lagerbuchsen ist eine dritte Buchse vorgesehen, die in das Lagergehäuse eingepreßt ist. Die Lagerbuchsen sind mittels elastischen Elementen mit der mittleren Buchse verbunden, damit jene kleine Schwingungsbewegungen unabhängig voneinander durchführen können. Zur Dämpfung dieser Schwingungen wird das zur Schmierung dienende Drucköl benutzt. Eine schwimmende Lagerung ist hierdurch nicht erreicht, zumal die Lagerbuchsen nicht nur zur radialen Lagerung sondern auch zur axialen Lagerung der Welle dienen. Ferner bewegen sich die Lagerbuchsen innerhalb vorgegebener Grenzen unabhängig voneinander.

Bei schnelldrehenden Rotoren kann ein als "oil whip" bezeichneter Effekt auftreten, welcher in Drehzahlbereichen größer als der zweifache Wert der ersten oder zweiten kritischen Drehzahl auftreten kann. Dieser Effekt bewirkt eine Anregung der Welle in dem Sinne, daß die Wellenenden eine der Wellenrotation überlagerte zweite Drehbewegung um die geometrische Achse durchführen. Der Teil der Welle, der zwischen den beiden axial beabstandet angeordneten Lagerflächen sich befindet, wird in die entgegengesetzte Richtung ausgelenkt, und man spricht daher vom sogenannten Seilschlageffekt. Wenn die überlagerte Drehbewegung mit der halben Wellendrehzahl erfolgt, kann ein metallischer Kontakt zwischen der Welle und der Lagerbuchse eintreten, woraus der vollständige Verlust der Lagertragfähigkeit und die Zerstörung der Lagerung resultieren können. Die auftretende Verformung der Welle kann zu einer unzulässigen Kantenpressung an den Enden der Lagerbuchsen führen. Schwimmende Lagerbuchsen, die etwa mit der halben Wellendrehzahl frei mitrotieren, können jeweils unabhängig voneinander leichte Radial- und Kippbewegungen ausführen. Bei kleinen Abgasturboladern, die mit sehr hohen Drehzahlen rotieren, und zwar über 150.000 U/min, genügen die genannten Maßnahmen jedoch nicht, um eine funktionssichere Lagerung zu ermöglichen. Derartige Abgasturbolader weisen recht kleine rotierende Massen bei minimalem Wellendurchmesser auf, wobei die aufgrund der Wellenverformung bedingte Unwuchtbelastung bis zu dem hundertfachen Wert der Masse des Rotors betragen kann. Eine derartige Wellendurchbiegung bzw. der dann eintretende Seilschlageffekt kann unzulässig groß werden, wodurch nicht nur die oben genannten mechanischen Schäden eintreten, sondern auch eine starke Geräuschentwicklung eintreten kann.

Der Erfindung liegt daher die Aufgabe zugrunde, einen Abgasturbolader, insbesondere für hohe Drehzahlen und kleine Abmessungen, vorzuschlagen, der eine gute Rotorstabilität bei hoher Funktionssicherheit und Lebensdauer gewährleistet. Der Abgasturbolader soll mit einer extrem dünnen bzw. biegeweichen Welle ausgestattet werden können und Reibungsverluste sollen gering gehalten werden. Auch bei kleinen rotierenden Massen, und zwar insbesondere des Turbinenrades, der dünnen Welle sowie des Verdichterrades, soll eine stabile Rotordynamik und ferner ein geräuscharmer Lauf gewährleistet werden. Der Abgasturbolader soll bei hohen Drehzahlen über 150.000 Umdrehungen und insbesondere bis wenigstens 200.000 U/min funktionssicher mit einer langen Lebensdauer laufen.

Diese Aufgabe wird gemäß den im Kennzeichen des Patentanspruchs 1 angegebenen Merkmalen gelöst.

Der erfindungsgemäße Abgasturbolader zeichnet sich bei einfacher Konstruktion durch eine hohe Funktionssicherheit aus, wobei auch bei hohen Drehzahlen größer als 150.000 U/min Lagerschäden oder störende Geräusche zuverlässig vermieden werden können. Die Welle kann im Hinblick auf geringe Lagerreibungsverluste einen äußerst geringen Durchmesser aufweisen, und es wird ein stabiler Betrieb ohne die oben aufgezeigten Nachteile erreicht. Die zur unmittelbaren Verbindung der beiden Lagerbuchsen angeordneten Stege sind unelastisch und es liegt folglich ein in sich starres Gebilde vor, das in seiner Gesamtheit schwimmen kann und alle Bewegungen, ausgenommen die Drehung um die Längsachse, ausführen kann. Aufgrund der schmalen Stege behalten die beiden Lagerbuchsen ihre geometrische Zuordnung zueinander. Aufgrund der Durchbrechungen wird eine erhebliche Reduzierung der Gesamtmasse der Hülse erreicht; dies ist von besonderer Bedeutung für das Schwingungsverhalten bei hohen Drehzahlen. Die Durchbrechungen sind als Langlöcher ausgebildet, deren Breite in Umfangsrichtung wesentlich größer ist als die Breite der schmalen Stege. Die sich in axialer Richtung erstreckenden Stege sind über ihre gesamte Länge im wesentlichen gleich breit ausgebildet. Die vergleichsweise geringe achsparallele Länge der inneren Lagerfläche trägt zur Reduzierung der Reibung bei, während die im Vergleich hierzu erfindungsgemäß größere Länge der äußeren Mantelfläche einen größeren Quetschölfilm ergibt, wodurch in zuverlässiger Weise eine gute Dämpfung bewirkt wird. Die direkte Verbindung der beiden Lagerbuchsen mittels Stegen und die zwischen denselben befindlichen Durchbrechungen gewährleisten einen ungestörten Abfluß des Schmiermittels bzw. Öles. Die erfindungsgemäß schmalen Stege und die wesentlich größeren Durchbrechungen vermeiden ein Stauen von Schmiermittel, das aus den Lagerspalten zur Mitte hin austritt; ein nachteiliges Abbremsen infolge von sich stauendem Schmiermittel wird vermieden. Die Hülse bzw. die beiden Lagerbuchsen dienen nicht zur Aufnahme von axialen Belastungen und sind somit ausschließlich als Radiallager wirksam, da anderenfalls die Aufnahme von Axialkräften die freie Bewegbarkeit bzw. das Schwimmen der Hülse verhindern würde. Zusätzlich ist für die Welle ein hier nicht weiter zu erläuterndes Axiallager vorgesehen. Die erfindungsgemäß vorgesehenen Sicherungsmittel dienen ausschließlich zur Festlegung der Hülse in Drehrichtung der Welle. Der Stift greift im Rahmen dieser Erfindung im wesentlichen punktförmig an einem der Verbindungsstege an. Es wird nur der eine rotatorische Freiheitsgrad durch die genannten Mittel aufgehoben, während die übrigen Freiheitsgrade, entsprechend dem vorgegebenen Spiel, für die schwimmend angeordnete Hülse vorhanden sind. Die Sicherungsmittel bewirken keine Einschränkung der axialen Bewegbarkeit der Hülse. Die Hülse wird an einer Rotation um die Drehachse gehindert, ohne daß im übrigen die freie Beweglichkeit bzw. die Möglichkeit des Schwimmens beeinträchtigt wird, wobei natürlich die Begrenzungen entsprechend dem losen Einbau in das Lagergehäuse wirksam sind. Unter Berücksichtigung der Tatsache, daß das Rotorgewicht im Vergleich zur Unwuchtbelastung der Welle sehr klein ist, wobei das "Seilschlagpotential" entsprechend groß ist, ist der Abstand der beiden Lagerbuchsen bzw. der Lagerflächen relativ klein.

Eine besondere Ausgestaltung ist dadurch gekennzeichnet, daß die achsparallele Länge der inneren Lagerfläche sich zu der der äußeren Mantelfläche wie 0,25 bis 0,5 zu 1 verhält. Hierdurch ist eine optimale Dimensionierung derart erreicht, daß einerseits eine äußerst geringe Lagerreibung im Bereich der inneren Lagerfläche stattfindet und andererseits aufgrund der vergleichsweise großen Mantelfläche eine ausgezeichnete Stabilität aufgrund der guten Quetschöldämpfung gewährleistet wird.

Eine weitere wichtige Ausführungsform ist dadurch gekennzeichnet, daß die achsparallele Länge jeder der inneren Lagerflächen der beiden Lagerbuchsen sich zum Innendurchmesser der Buchsen wie 0,3 bis 0,5 zu 1 verhält. Durch diese gerade im Hinblick auf die extrem dünnen Wellendurchmesser wichtige Auslegung werden Lagerreibungsverluste minimiert.

In einer besonderen Ausgestaltung wird die Hülse an ihren beiden axialen Enden mit Spiel mittels Sicherungselementen, insbesondere Sicherungsringen, gegen axiale Verschiebung gesichert. Eine einfache und kostengünstige Fertigung und ferner die freie Beweglichkeit der Hülse wird gewährleistet. Im Rahmen dieser Erfindung wird der Axialschub ausschließlich von einem separaten Axiallager aufgenommen. Diese Sicherungsringe dienen gleichzeitig auch als Drosselelement. In dem Spalt zwischen Mantelfläche und Bohrung des Lagergehäuses kann sich somit ein hoher Druck aufbauen, der im Hinblick auf die Quetschöldämpfung von besonderer Bedeutung ist. Aus dem gleichen Grunde sind auch die zur Mitte gewandten Enden der Mantelflächen als Drosselstellen ausgebildet. Dies erfolgt zweckmäßig durch Stehenlassen der Grate, die beim Einbringen der Durchbrechungen bzw. beim Herausarbeiten der Stege entstehen.

In einer weiteren Ausführungsform ist die Hülse derart in dem Lagergehäuse angeordnet, daß die Stege im wesentlichen in einer horizontalen Ebene liegen und die Durchbrüche vertikal nach unten bzw. oben gerichtet sind. Die Stege sind erfindungsgemäß relativ schmal ausgebildet und seitlich der Welle angeordnet. Ein ordnungsgemäßer freier Ölabfluß ist durch die nach unten gerichtete Durchbrechung gewährleistet. Aufgrund der symmetrischen Ausbildung der Hülse mit zwei seitlichen Stegen können Montagefehler ausgeschlossen werden. Bei der erfindungsgemäßen Hülse ist die axiale Länge der Stege im wesentlichen gleich groß wie die axiale Länge der Mantelfläche der jeweiligen Lagerbuchse.

Die Erfindung wird nachfolgend an Hand des in der Zeichnung dargestellten Ausführungsbeispieles näher erläutert. Es zeigen:

Fig. 1 einen axialen Längsschnitt durch einen Abgasturbolader,
Fig. 2 vergrößert die Hülse mit den beiden Lagerbuchsen,
Fig. 3 einen Schnitt entlang Schnittlinie A, gemäß Fig. 1.

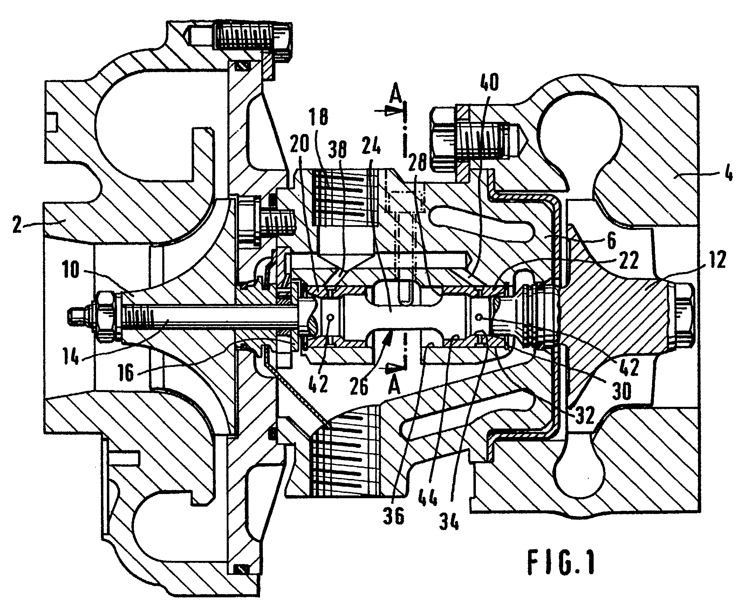

In Fig. 1 ist links das Verdichtergehäuse 2 und rechts das Turbinengehäuse 4 dargestellt, die in bekannter Weise über ein Lagergehäuse 6 miteinander verbunden sind. Das Verdichterrad 10 ist ebenso wie das Turbinenrad 12 auf einer Welle 14 drehfest angeordnet. Zur axialen Lagerung im Lagergehäuse 6 dient ein Axiallager 16. Durch eine Bohrung
18 wird Drucköl, insbesondere vom Motor, dem Lagergehäuse 6 zugeführt, um in gewohnter Weise
zur Schmierung und Kühlung der Lager zu dienen.

Die Welle 14 weist einen relativ kleinen Durchmesser auf und ist in einer Innenbohrung des Lagergehäuses 6 mittels zwei axial beabstandeten Lagerbuchsen 20, 22 radial gelagert. Die beiden Lagerbuchsen 20, 22 sind mittels zweier axial verlaufenden schmalen Stegen 24 miteinander zu einer Hülse
26 integriert. In der Zeichnung ist hier nur der eine
Steg 24, der hinter der Zeichenebene liegt, zu erkennen. Ein weiterer Steg ist entsprechend vor der
Zeichenebene vorgesehen. Die Hülse 26 weist somit zwischen den beiden Stegen 24 jeweils eine als
Langloch ausgebildete Durchbrechung 28 auf. Die
beiden Stege 24 sind im wesentlichen in einer Radialebene jeweils seitlich der Welle 14 angeordnet, und
durch die vertikal unterhalb befindliche Durchbrechung 28 kann das Schmiermittel ungehindert abfließen; ein Stauen von Öl im mittleren Bereich der Hülse und daraus resultierende Verluste werden vermieden. Erfindungsgemäß weisen ferner die beiden
Stege 24 in axialer Richtung näherungsweise die
gleiche Länge auf wie die nachfolgend noch zu erläuternden äußeren Mantelflächen 32 der beiden
Lagerbuchsen 20, 22. Die Hülse 26 wird mittels Sicherungsringen 30 axial gesichert. Wesentlich ist,
daß die axiale Lagerung ausschließlich mittels des
Axiallagers 16 erfolgt, wobei die Hülse 26 zwischen
den Sicherungsringen 30 mit Spiel in dem Lagergehäuse 6 angeordnet ist. Durch die erfindungsgemäß
als in axialer Richtung sich erstreckende Langlöcher ausgebildeten Durchbrechungen 28 wird die
Gesamtmasse der Hülse minimiert und die freie Bewegbarkeit der Hülse bei wesentlich reduzierten
Massekräften realisiert.

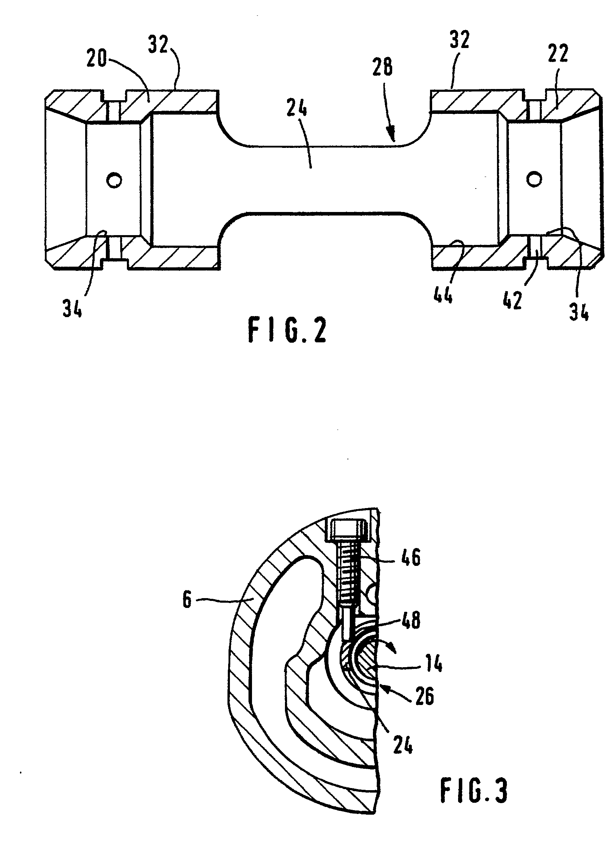

Wie aus der vergrößerten Darstellung gemäß
Fig. 2 ersichtlich, weist die äußere Mantelfläche 32
axial eine größere Länge auf als die innere Lagerfläche 34. Zwischen der Innenfläche 36 der Bohrung
des Lagergehäuses 6 und der Mantelfläche 32 ist
somit ein Quetschölspalt vorhanden, der eine wesentlich größere Fläche und axiale Länge aufweist,
als die innere Lagerfläche. Es bildet sich erfindungsgemäß ein großer Quetschölfilm aus, und eine
funktionssichere Dämpfung aufgrund dieses Quetschölspaltes wird erreicht. Im Rahmen dieser Erfindung führt zu dem Quetschölspalt jeder Lagerstelle
jeweils eine Bohrung 38, 40, durch welche das
Drucköl zugeführt wird. Die an den beiden axialen
Stirnflächen der Lagerbuchsen 20, 22 bzw. der Hülse 26 zur Fixierung der Hülse angeordneten Sicherungsringe 30 dienen gleichzeitig auch als Drosselelemente des Quetschölspaltes, wodurch ein zuverlässiger Druckaufbau gewährleistet wird. Auch die
inneren Enden der Mantelflächen sind als Drosselstellen ausgebildet. Dies erfolgt erfindungsgemäß
einfach dadurch, daß die beim Einbringen der
Durchbrechungen bei der Herstellung der Stege 24
erzeugten Grate stehengelassen werden, welche
geringfügig über die Mantelfläche radial nach außen vorstehen. Die beiden Lagerbuchsen weisen jeweils zwei äußere Umfangsnuten mit vier über den Umfang gleichmäßig verteilten Radialbohrungen 42
auf, durch welche das Drucköl zu den inneren Lagerflächen 34 gelangt. Erfindungsgemäß schließen
sich zur Mitte hin axial an die innere Lagerfläche 34
Erweiterungen 44 mit vergrößertem Durchmesser
an. Diese Erweiterungen 44 gehen dann kontinuierlich in die Stege 24 über, die ebenfalls einen entsprechenden radialen Abstand zur Welle 14 aufweisen; die beiden Erweiterungen 44 weisen eine axiale
Erstreckung in der Größenordnung der Lagerflächen auf. Die innere Lagerfläche 34 ist somit wesentlich kleiner als die äußere Mantelfläche 32, und
die Reibungsverluste können folglich klein gehalten
werden.

Fig. 3 zeigt die Mittel zur Festlegung bzw. zur
Verhinderung der Rotation der Hülse 26. Von der
Hülse 26 ist hier der eine Steg 24 zu erkennen. Im
Lagergehäuse 6 befindet sich ein Sicherungsstift
46, dessen Spitze auf der Seitenfläche 48 des Steges 24 aufliegt. Es ist eine im wesentlichen punktartige Auflagerung geschaffen, so daß im übrigen die
Bewegbarkeit der Hülse 26 nicht beeinträchtigt
wird. Mittels des Sicherungsstiftes 46 wird ausschließlich die Rotation unterbunden. Im Rahmen der
Erfindung greift der Stift 46 im wesentlichen in der
Mitte zwischen den beiden Lagerbuchsen 20, 22 an.
Im übrigen ist die Hülse 26 entsprechend dem Spiel
zwischen Mantelfläche und Lagergehäuse einerseits sowie zwischen der inneneren Lagerfläche 34
und Welle 14 andererseits und ferner dem Spiel zu
den Sicherungsringen frei schwimmend angeordnet.
Mittels des Sicherungsstiftes 46 erfolgt keinerlei
Festlegung in axialer Richtung. Wesentlich ist ferner, daß der Sicherungsstift 46 nicht in radialer
Richtung, sondern parallel zu einer Axialebene angeordnet ist. Das Anschlagen der Welle an den aufgrund von Fertigungstoleranzen zu weit eingeschraubten Sicherungsstift 46 wird vermieden. Die
in axialer Richtung sich erstreckenden Stege 24
sind relativ schmal ausgebildet und gewährleisten
gleichwohl eine starre Verbindung zwischen den
beiden axial beabstandet angeordneten Lagerbuchsen. Die erfindungsgemäßen zwei Stege 24 werden
mit geringem Fertigungsaufwand durch Entfernen
des ursprünglich im Bereich der Durchbrechungen
28 vorhandenen Materials hergestellt.

Bezugszeichenliste

2 Verdichtergehäuse
4 Turbinengehäuse
6 Lagergehäuse
10 Verdichterrad
12 Turbinenrad
14 Welle
16 Axiallager
18 Bohrung
20, 22 Lagerbuchse
24 Steg
26 Hülse
28 Durchbrechung
30 Sicherungsring
32 Mantelfläche
34 innere Lagerfläche
36 Innenbohrung

38, 40 Bohrung
42 Zulaufbohrung
44 Erweiterung
46 Sicherungsstift
48 Seitenfläche

**Patentansprüche**

1. Lagerung eines Abgasturboladers mit einer Hülse (26), welche in einer Bohrung (36) eines Lagerhäuses zur radialen Lagerung einer Welle (14) schwimmend angeordnet und mittels eines im Lagergehäuse (6) befestigten und in eine Durchbrechung (28) der Hülse ragenden Sicherungsstiftes (46) gegen Rotation gesichert ist, wobei die Hülse (26) an ihren beiden axialen Endbereichen jeweils eine innere Lagerfläche (34) und eine äußere Mantelfläche (32) aufweist, wobei axial zwischen den Endbereichen wenigstens zwei Durchbrechungen (28) vorgesehen sind und wobei das in einem Spalt zwischen der Hülse (26) und der Bohrung (36) vorhandene Schmiermittel eine Dämpfung bewirkt, dadurch gekennzeichnet, daß zwischen den Durchbrechungen (28) sich in axialer Richtung erstreckende schmale Stege (24) angeordnet sind, daß die Stege (24) steif und in Umfangsrichtung wesentlich schmaler ausgebildet sind als die Durchbrechungen (28) und daß der Sicherungsstift (46) mit seiner Spitze auf einer seitlichen Außenfläche (48) eines der Stege (24) aufliegt.

2. Lagerung nach Anspruch 1, dadurch gekennzeichnet, daß die schmalen Stege (24) über die gesamte Steglänge im wesentlichen gleich breit ausgebildet sind, wobei die Durchbrechungen (28) als Langlöcher ausgebildet sind, die sich in Umfangsrichtung über einen größeren Winkelbereich erstrecken als die Stege (24).

3. Lagerung nach Anspruch 1 oder 2, dadurch gekennzeichnet, daß die achsparallele Länge der inneren Lagerfläche (34) sich zu der der äußeren Mantelfläche (32) wie 0,25 bis 0,5 zu 1 verhält.

4. Lagerung nach einem der Ansprüche 1 bis 3, dadurch gekennzeichnet, daß die achsparallele Länge der inneren Lagerfläche (34) sich zum Innendurchmesser wie 0,3 bis 0,5 zu 1 verhält.

5. Lagerung nach einem der Ansprüche 1 bis 4, dadurch gekennzeichnet, daß die Stege (24) in axialer Richtung im wesentlichen gleich lang ausgebildet sind wie eine der Mantelflächen (32).

6. Lagerung nach einem der Ansprüche 1 bis 5, dadurch gekennzeichnet, daß an die innere Lagerfläche (34) jeweils zur Mitte zu den Stegen (24) sich eine Erweiterung (44) anschließt, die bevorzugt im wesentlichen die gleiche axiale Länge wie die innere Lagerfläche (34) aufweist.

7. Lagerung nach einem der Ansprüche 1 bis 6, dadurch gekennzeichnet, daß die Hülse (26) an beiden axialen Enden mit Spiel mittels Sicherungselementen, insbesondere Sicherungsringen (30), gegen axiale Verschiebung gesichert ist.

8. Lagerung nach Anspruch 7, dadurch gekennzeichnet, daß die Sicherungselemente als Drosselelemente für das Schmiermittel zwischen Mantelfläche (32) und der die Hülse (26) aufnehmenden Innenbohrung (36) des Lagergehäuses (6) dienen.

9. Lagerung nach einem der Ansprüche 1 bis 8, dadurch gekennzeichnet, daß die zur Mitte liegenden Enden der Mantelflächen (32) als Drosselstellen ausgebildet sind.

10. Lagerung nach einem der Ansprüche 1 bis 9, dadurch gekennzeichnet, daß die zur Mitte liegenden Enden der inneren Lagerflächen (34) als Drosselstellen ausgebildet sind.

11. Lagerung nach einem der Ansprüche 1 bis 10, dadurch gekennzeichnet, daß für jede Lagerfläche (34) eine getrennte Schmiermittelzuführung vorgesehen ist, die insbesondere eine Bohrung (38, 40), im Lagergehäuse (6) und eine Umfangsnut in der Hülse (26) aufweist, wobei über insbesondere vier radiale Zulaufbohrungen (42) das Schmiermittel zur inneren Lagerfläche (34) geführt wird.

12. Lagerung nach einem der Ansprüche 1 bis 11, dadurch gekennzeichnet, daß die Hülse (26) derart in dem Lagergehäuse (6) angeordnet ist, daß die Stege (24) seitlich der Welle (14) im wesentlichen in einer horizontalen Ebene liegen, wobei die Durchbrechungen (28) vertikal unten bzw. oben angeordnet sind.

13. Lagerung nach einem der Ansprüche 1 bis 12, dadurch gekennzeichnet, daß der im Lagergehäuse (16) befestigte, insbesondere eingeschraubte, Sicherungsstift (46) im wesentlichen axial in der Mitte auf einem der Stege (24) aufliegt.

**Claims**

1. Mounting of an exhaust gas turbo charger with a sleeve (26) which is floatingly mounted in a bore (36) of a bearing housing for radially mounting a shaft (14) and which is held against rotation by means of a retaining pin (46) fixed in the bearing housing (6) and projecting into an opening (28) in the sleeve, the sleeve (26) having an inner bearing surface (34) and an outer generated surface (32) at each of its two axial end portions, at least two openings (28) being provided axially between the end portions, the lubricant provided in a gap between the sleeve (26) and the bore (36) providing a damping effect, characterized in that narrow webs (24) extending in the axial direction are provided between the openings (28), in that the webs (24) are rigid and substantially narrower in the circumferential direction than the openings (28), and in that the retaining pin (46) abuts with its tip on a lateral outer surface (48) of one of the webs (24).

2. Mounting according to claim 1, characterized in that the narrow webs (24) are of substantially equal width over their entire length, the openings (28) being in the form of elongate holes which in the circumferential direction extend over a larger angular extent than the webs (24).

3. Mounting according to claim 1 or 2, characterized in that the ratio of the length parallel to the axis of the inner bearing surface (34) to that of the outer generated surface (32) is 0.25–0.5 to 1.

4. Mounting according to one of claims 1 to 3, characterized in that the ratio of the length parallel to the axis of the inner bearing surface (34) to the inner diameter is 0.3–0.5 to 1.

5. Mounting according to one of claims 1 to 4, characterized in that the webs (24) are substantially the same length in the axial direction as one of the generated surfaces (32).

6. Mounting according to one of claims 1 to 5, characterized in that, adjoining the inner bearing surface (34) towards the centre of the webs (24), is a widened portion (44) which preferably has substantially the same axial length as the inner bearing surface (34).

7. Mounting according to one of claims 1 to 6, characterized in that the sleeve (26) is retained against axial movement at both axial ends with a degree of play by means of retaining elements, particularly retaining rings (30).

8. Mounting according to claim 7, characterized in that the securing elements serve as throttle elements for the lubricant between the generated surface (32) and the inner bore (36) of the bearing housing (6) which receives the sleeve (26).

9. Mounting according to one of claims 1 to 8, characterized in that the ends located towards the centre of the generated surfaces (32) are designed as restrictors.

10. Mounting according to one of claims 1 to 9, characterized in that the ends located towards the centre of the inner bearing surfaces (34) are designed as restrictors.

11. Mounting according to one of claims 1 to 10, characterized in that a separate lubricant inlet is provided for each bearing surface (34), having in particular a bore (38, 40) in the bearing housing (6) and a circumferential groove in the sleeve (26), the lubricant being conveyed to the inner bearing surface (34) through, in particular, four radial supply bores (42).

12. Mounting according to one of claims 1 to 11, characterized in that the sleeve (26) is arranged in the bearing housing (6) so that the webs (24) are located substantially in a horizontal plane laterally of the shaft (14) substantially in a horizontal plane, the openings (28) being located vertically below and above respectively.

13. Mounting according to one of claims 1 to 12, characterized in that the retaining pin (46) which is fixed, more particularly screwed, into the bearing housing (16) abuts substantially axially in the centre on one of the webs (24).

**Revendications**

1. Paller pour turbo-compresseur sur gaz d'échappement comprenant une fourrure (26) qui est montée flottante dans un alésage (36) d'un carter de palier pour le tourillonnement radial d'un arbre (14), et qui est immobilisé à l'encontre de la rotation au moyen d'une goupille d'arrêt (46) fixée dans le carter de paller (6) et engagée dans une ouverture (28) de la fourrure, la fourrure (26) présentant, dans chacune de ses régions terminales axiales, une surface de portée intérieure (34) et une surface latérale extérieure (32), cependant qu'il est prévu au moins deux ouvertures (28) axialement entre les deux régions terminales et que le lubrifiant présent dans une fente comprise entre la fourrure (26) et l'alésage (36) assure une fonction d'amortissement, caractérisé en ce que des voiles étroits (24) s'étendant dans la direction axiale sont disposés entre les ouvertures (28), en ce que les voiles (24) sont d'une constitution rigide et sensiblement plus étroite que les ouvertures (28), dans la direction circonférentielle, et en ce que la goupille d'arrêt (46) est en appui par sa pointe sur une surface extérieure latérale (48) d'un des voiles (24).

2. Palier selon la revendication 1, caractérisé en ce que les voiles étroits (24) sont d'une configuration sensiblement de même largeur sur toute la longueur des voiles, les ouvertures (28) présentant la configuration de trous allongés qui s'étendent sur un plus grand angle que les voiles (24) dans la direction circonférentielle.

3. Palier selon la revendication 1 ou 2, caractérisé en ce que le rapport entre la longueur de la surface de portée intérieure (34), mesurée dans la direction parallèle à l'axe et la surface latérale extérieure (32), est de 0,25/1 à 0,5/1.

4. Palier selon l'une des revendications 1 à 3, caractérisé en ce que le rapport entre la longueur de la surface de portée intérieure (34), mesurée dans la direction parallèle à l'axe et le diamètre intérieur, est de 0,3/1 à 0,5/1.

5. Palier selon l'une des revendications 1 à 4, caractérisé en ce que les voiles (24) sont de configuration sensiblement aussi longue dans la direction axiale que l'une des surfaces latérales (32).

6. Palier selon l'une des revendications 1 à 5, caractérisé en ce que, à la surface de portée intérieure (34), fait suite vers le milieu des voiles (24) un élargissement (44) qui présente de préférence sensiblement la même longueur axiale que la surface de portée intérieure (34).

7. Palier selon l'une des revendications 1 à 6, caractérisé en ce que la fourrure (26) est arrêtée en translation axiale avec jeu aux deux extrémités axiales, au moyen d'éléments d'arrêt en particulier de bagues d'arrêt (30).

8. Palier selon la revendication 7, caractérisé en ce que les éléments d'arrêt servent d'éléments d'étranglement pour le lubrifiant entre la surface latérale (32) et l'alésage intérieur (36) du carter de palier (6) qui reçoit la fourrure (26).

9. Palier selon l'une des revendications 1 à 8, caractérisé en ce que les extrémités des surfaces latérales (32) qui sont dirigées vers le milieu constituent des zones d'étranglement.

10. Palier selon l'une des revendications 1 à 9, caractérisé en ce que les extrémités des surfaces de portée intérieures (34) qui sont dirigées vers le milieu constituent des zones d'étranglement.

11. Palier selon l'une des revendications 1 à 10, caractérisé en ce qu'il est prévu, pour chaque surface de portée (34), une arrivée de lubrifiant séparée qui comprend en particulier un perçage (38, 40) ménagé dans le carter de palier (6) et une gorge circonférentielle ménagée dans la fourrure (26), le lubrifiant étant amené à la surface de portée intérieure (34) par plusieurs, en particulier quatre perçages d'arrivée radiaux (42).

12. Palier selon l'une des revendications 1 à 11, caractérisé en ce que la fourrure (26) est disposée dans le carter de palier (6) de telle manière que les

volles (24) se trouvent latéralement à l'arbre (14) sensiblement dans un même plan horizontal, les ouvertures (28) étant disposées verticalement, en bas et en haut respectivement.

13. Palier selon l'une des revendications 1 à 12, caractérisé en ce que la goupille d'arrêt (46) qui est fixée, en particulier vissée, dans le carter de palier (16) repose sur l'un des voiles (24), au milieu et dans une direction sensiblement axiale.

FIG.1

FIG. 2

FIG. 3